# EUROPEAN PATENT APPLICATION

(11) **EP 4 822 930 A1**
(43) Date of publication of application: **14.10.2026**
(21) Application number: 24900180.1
(22) Date of filing: 01.05.2024
(51) Int. Cl.: H02J 1/00

(54) **DC POWER DISTRIBUTION SYSTEM AND DC SWITCHBOARD**

(30) Priority: 08.12.2023 JP 2023207764
(71) Applicant: Hitachi Industrial Equipment Systems Co., Ltd., Tokyo 101-0021 (JP)
(72) Inventor: TAKEDA, Kenji, Tokyo 101-0021 (JP); WATABE, Yoshihisa, Tokyo 101-0021 (JP); UKISU, Tomokazu, Tokyo 101-0021 (JP)
(74) Representative: MERH-IP Matias Erny Reichl Hoffmann Patentanwälte PartG mbB
(86) International application number: PCT/JP2024/016808
(87) International publication number: WO 2025/120880

(57) **Abstract**

A DC power distribution system or a DC power distribution board is provided that enables a power distribution path corresponding to a configuration or a situation of a facility to be flexibly constructed. Here, a DC wire LNd runs in one loop through at least two or more DC power distribution boards 1 of a plurality of DC power distribution boards 1 to form a DC loop wire. A first DC power distribution board 1B, one of the plurality of DC power distribution boards 1, includes a bidirectional DC/DC converter 11A, and is configured to be able to connect a DC power storage device 4 that stores DC power via the bidirectional DC/DC converter 11A. A power distribution system control device 6 adjusts power flow along the DC wire LNd by controlling the bidirectional DC/DC converter 11A.

## Description

### TECHNICAL FIELD

The present invention relates to a DC power distribution system and a DC power distribution board.

### BACKGROUND ART

Patent Document 1 (Japanese Patent Application Laid-Open No. 2015-163032) discloses a power feeding system that supplies power from a DC power supply device to a load device via a power feeding path. Switch units are inserted on the power feeding path. In addition, a dendritic feeding path, a bus feeding path, and a loop feeding path are illustrated as a connection form of the power feeding path. In the dendritic feeding path, a load device is connected to an end of a path branched in a dendritic shape. In the bus feeding path, a power distribution board is connected to an end of a branched portion from a branch point on a bus. In the loop feeding path, a plurality of load devices are connected on a loop wire connected to one power distribution board.

### RELATED ART DOCUMENT

### PATENT DOCUMENT

Patent Document 1: Japanese Patent Application Laid-open Publication No. 2015-163032

### SUMMARY OF THE INVENTION

### PROBLEMS TO BE SOLVED BY THE INVENTION

In recent years, widespread use of renewable energy has been progressing as one of global warming countermeasures. Among them, solar power generation has attracted attention due to the easiness of system installation. In solar power generation, as a part of measures for improving energy utilization efficiency, a DC power distribution method of distributing DC power by solar power generation to a load without converting the power to AC has been studied.

In addition, when a power storage device is provided in addition to the solar power generation system, surplus power from solar power generation can be accumulated. This makes it possible to perform operations such as promoting private use, reducing energy costs by charging and discharging depending on fluctuations in a unit price of retail power, and backing up an important load in the event of disasters or the like. In the power storage device, the utilization efficiency is expected to be improved by DC power distribution as in the solar power generation system.

Here, for example, in a case where it is assumed that a DC power distribution path is widely laid over the entire floor of a factory facility or the like, it is conceivable to use a power distribution path such as the dendritic feeding path, the bus feeding path, or the loop feeding path as described in Patent Document 1. It is also conceivable to insert a switch on the power distribution path. With such a configuration, it is possible to limit the power distribution range so as to stop power distribution to a specific range by opening and closing the switch. However, for example, if the configuration of the facility is changed, or if the operating situation of the facility or the power generation situation in solar power generation is changed, it is difficult to flexibly construct the power distribution path corresponding to the configuration or the situation of the facility.

The present invention has been made in view of such circumstances, and an object of the present invention is to provide a DC power distribution system or a DC power distribution board enabling a power distribution path corresponding to the configuration or the situation of the facility to be flexibly constructed.

The above-described and other objects and novel features of the present invention would become apparent from the description of the present specification and the accompanying drawings.

### MEANS FOR SOLVING THE PROBLEMS

A DC power distribution system according to an embodiment includes a plurality of DC power distribution boards that distribute input DC power, a DC wire that transmits DC power between the plurality of DC power distribution boards, and a power distribution system control device that performs centralized control of the plurality of DC power distribution boards. The DC wire runs in one loop through at least two or more DC power distribution boards of the plurality of DC power distribution boards to form a DC loop wire. A first DC power distribution board, one of the plurality of DC power distribution boards, includes a bidirectional DC/DC converter, and is configured to be able to connect a DC power storage device that stores DC power via the bidirectional DC/DC converter. The power distribution system control device adjusts power flow along the DC wire by controlling the bidirectional DC/DC converter.

### EFFECTS OF THE INVENTION

According to the embodiment, it is possible to flexibly construct a power distribution path corresponding to the configuration or the situation of the facility.

### BRIEF DESCRIPTIONS OF THE DRAWINGS

[FIG. 1] is a schematic diagram illustrating a configuration example of a DC power distribution system according to a first embodiment.
[FIG. 2] is a schematic diagram illustrating a configuration example of a DC power distribution system in which the configuration illustrated in FIG. 1 is expanded.
[FIG. 3] is a perspective view illustrating an internal configuration example of a DC power distribution board in FIG. 1.
[FIG. 4] is a block diagram illustrating a configuration example of a power distribution system control device in FIG. 1.
[FIG. 5A] is a circuit diagram illustrating a configuration example of a bidirectional DC/DC converter that is one form of a DC/DC converter in FIG. 1.
[FIG. 5B] is a block diagram illustrating a configuration example of a DC/DC converter controller in FIG. 5A.
[FIG. 6] is a schematic diagram illustrating an example of an electric circuit model constructed by a power flow simulation unit in FIG. 4.
[FIG. 7] is a schematic diagram illustrating an example of a change in a power flow when values of parameters are changed in the electric circuit model illustrated in FIG. 6.
[FIG. 8A] is a schematic diagram illustrating an example of a detection algorithm of a noise detection unit in FIG. 4.
[FIG. 8B] is a schematic diagram illustrating an example of the detection algorithm of the noise detection unit in FIG. 4.
[FIG. 8C] is a schematic diagram illustrating an example of the detection algorithm of the noise detection unit in FIG. 4.
[FIG. 8D] is a schematic diagram illustrating an example of the detection algorithm of the noise detection unit in FIG. 4.
[FIG. 8E] is a schematic diagram illustrating an example of the detection algorithm of the noise detection unit in FIG. 4.
[FIG. 9] is a perspective view illustrating an arrangement configuration example in which a DC power distribution system according to a second embodiment is applied to a facility.
[FIG. 10A] is a plan view illustrating a schematic arrangement configuration example in which the DC power distribution system illustrated in FIG. 9 is viewed from above.
[FIG. 10B] is a plan view illustrating an arrangement configuration example in which the arrangement illustrated in FIG. 10A is modified.

### DETAILED DESCRIPTION OF PREFERRED EMBODIMENTS

Hereinafter, embodiments of the present invention will be described with reference to the drawings. The embodiments are examples for describing the present invention, and omission and simplification are appropriately made for clarity of description. The present invention can be implemented in various other forms. Unless otherwise specified, each component may be singular or plural. Positions, sizes, shapes, ranges, and the like of the components illustrated in the drawings may not represent actual positions, sizes, shapes, ranges, and the like in order to facilitate understanding of the invention. Therefore, the present invention is not necessarily limited to the positions, sizes, shapes, ranges, and the like disclosed in the drawings.

As examples of various types of information, expressions such as "table", "list", and "queue" may be used for description, but the various types of information may be expressed in a data structure other than these. For example, various types of information such as "XX table," "XX list," and "XX queue" may be "XX information." In describing identification information, expressions such as "identification information," "identifier," "name," "ID," and "number" are used, but these are interchangeable.

In addition, in a case where there is a plurality of components having the same or similar functions, different subscripts may be added to the same reference numerals for description. For example, there is a case where the reference numeral of one component is "1," and a plurality of components is distinguished from each other by "1A," "1B," or the like. If the plurality of components does not need to be distinguished from each other, the subscript may be omitted for description.

In the embodiments, processing performed by executing a program may be described. As an example, a computer performs processing defined by the program while executing the program with a processor (for example, CPU, GPU) and using a storage resource (for example, a memory), an interface device (for example, a communication port), and the like. Therefore, the subject of the processing performed by executing the program may be the processor. In addition, the subject of the processing performed by executing the program may be a controller, a device, a system, a computer, or a node having a processor.

Furthermore, the subject of the processing performed by executing the program is only required to be an arithmetic unit, and may include a dedicated circuit that performs dedicated processing. Here, the dedicated circuit is, for example, a field programmable gate array (FPGA), an application specific integrated circuit (ASIC), a complex programmable logic device (CPLD), or the like.

The program may be installed to the computer from a program source. The program source may be, for example, a program distribution server or a computer-readable storage medium. In a case where the program source is the program distribution server, the program distribution server may include the processor and the storage resource that stores a program to be distributed, and the processor of the program distribution server may distribute the program to be distributed to another computer. In addition, in the embodiments, two or more programs may be implemented as one program, or one program may be implemented as two or more programs.

### (First Embodiment)

### <Configuration of DC Power Distribution System>

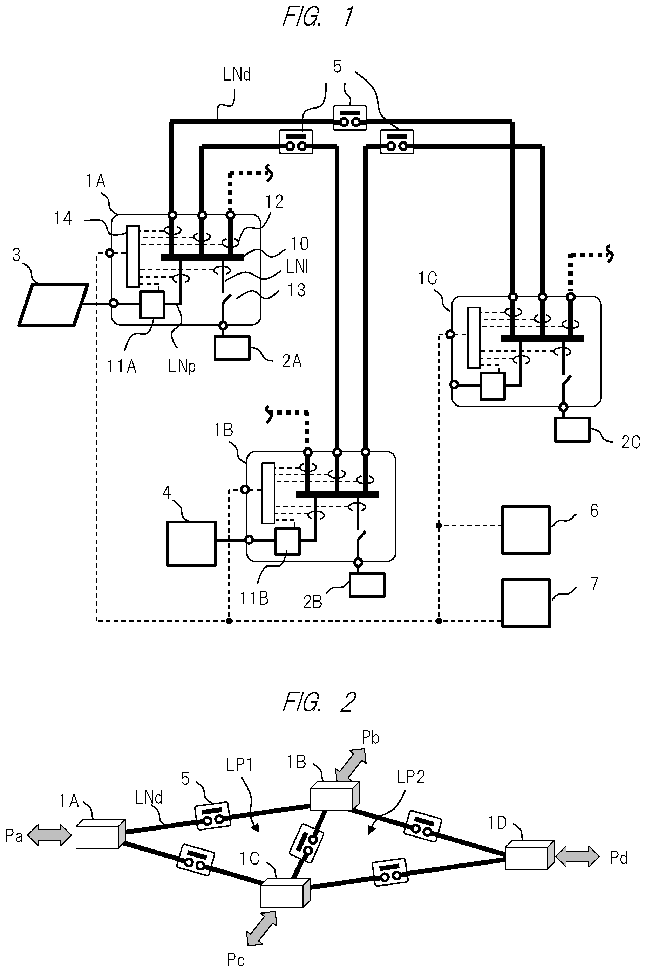

FIG. 1 is a schematic diagram illustrating a configuration example of a DC power distribution system according to a first embodiment. The DC power distribution system illustrated in FIG. 1 is applied to various facilities typified by, for example, a production factory. The DC power distribution system includes a plurality of (in this example, three) DC power distribution boards 1A, 1B, and 1C, a plurality of (in this example, three) DC switches 5, a power distribution system control device 6, and an energy management device 7. Each DC power distribution board 1 distributes input DC power. That is, the plurality of DC power distribution boards 1 is connected to each other via a DC wire LNd, and transmit DC power via the DC wire LNd.

Here, the DC wire LNd runs in one loop through at least two or more DC power distribution boards 1 of the plurality of DC power distribution boards 1 to form a DC loop wire. In this example, the DC loop wire is formed through the three DC power distribution boards 1A, 1B, and 1C, but can also be formed through two DC power distribution boards 1 as a minimum unit. Each DC power distribution board 1 mainly includes a DC branch unit 10, a DC/DC converter 11, a current sensor 12, a DC circuit breaker 13, and a power distribution board controller 14.

The DC branch unit 10 is a part of a power circuit that connects the plurality of DC wires LNd pulled out to the outside and aggregates or branches the plurality of DC wires LNd, and is made of a conductive material such as a copper bar or a terminal block. The DC/DC converter 11 is connected to the DC branch unit 10 via a power supply wire LNp. The DC/DC converter 11 converts power between a DC terminal on a primary side and a DC terminal on a secondary side. In the specification, a terminal connected to the DC branch unit 10 is referred to as the secondary side.

The current sensor 12 measures a current of each wire connected to the DC branch unit 10. In this example, the current sensor 12 measures each of currents flowing through the power supply wire LNp connected to the DC/DC converter 11, a load power line LNl connected to an external DC load 2 via the DC circuit breaker 13, and the plurality of DC lines LNd connected to the outside.

The DC circuit breaker 13 is a circuit breaker for connecting the DC load 2 provided outside the DC power distribution board 1 to the DC branch unit 10, and is inserted on the load power line LNl connecting the DC load 2 and the DC branch unit 10. Specifically, when an abnormal current due to a ground fault, a short circuit, or the like occurs in the load power line LNl, the DC circuit breaker 13 detects the abnormal current and cuts off a path of the load power line LNl. Thus, the DC circuit breaker 13 protects other DC systems connected to the DC branch unit 10.

In this example, a DC distributed power supply 3 is connected to the primary side of the DC/DC converter 11A included in the DC power distribution board (second DC power distribution board) 1A. The DC distributed power supply 3 can be constituted by, for example, a solar power generation panel or a combiner box connected thereto. In this case, the DC/DC converter 11A is only required to have a unidirectional power conversion function from the primary side to the secondary side. Note that, in a case where the solar power generation panel is used, it is desirable to mount a function of performing maximum power point tracking control or the like by operating a terminal voltage according to the amount of solar radiation to search for a maximum power point. This function can be mounted on, for example, the DC/DC converter 11, the power distribution board controller 14, or the energy management device 7.

On the other hand, a DC power storage device 4 is connected to the primary side of the DC/DC converter 11B included in the DC power distribution board (first DC power distribution board) 1B. As the DC power storage device 4, for example, a lithium ion battery, a lead storage battery, an electric double layer capacitor, a lithium ion capacitor, an electrolytic capacitor, or the like can be applied. In a case where the DC power storage device 4 is connected, the DC/DC converter 11B is preferably a bidirectional DC/DC converter. The bidirectional DC/DC converter has a bidirectional power conversion function in a direction from the primary side to the secondary side and in a direction from the secondary side to the primary side.

As in this example, the distributed DC power supply 3 and the DC power storage device 4 are connected to the DC power distribution board 1A and the DC power distribution board 1B, respectively, and the DC power distribution boards 1 at both ends are configured to be able to distribute power through the DC wire LNd, thereby making it possible to perform a system operation, for example, such that energy self-sufficiency is enhanced using renewable energy. That is, for example, when the DC generation power generated in the DC power distribution board 1A is surplus relative to the consumption of the DC load 2A, the surplus power can be charged in the DC power storage device 4 of the DC power distribution board 1B. Then, the power charged in the DC power storage device 4 can be used, for example, when the DC generation power is insufficient or in the event of a disaster.

In a case where the DC power storage device 4 is used, it is desirable to, for example, mount a function of managing a state of charge (SOC) or the like in order to prevent overcharge that may occur due to a finite stored energy capacity. This function can be mounted on, for example, the power distribution board controller 14 or the energy management device 7.

The DC switch 5 is inserted on the DC wire LNd and is configured to be able to open and close between two terminals. In this example, one DC switch 5 is inserted on each of the three DC wires LNd connecting the plurality of DC power distribution boards 1A, 1B, and 1C to each other. The DC switch 5 is opened and closed for various purposes. As an example, the DC switch 5 can be opened and closed for the purpose of reducing the loss on the wire according to the situation of generation power on the system and power consumption of the DC load 2. Alternatively, the DC switch 5 can be opened and closed for the purpose of locally insulating some of the DC power distribution boards 1 for periodic maintenance.

The power distribution board controller 14 can be implemented by, for example, a wiring board on which a microcontroller including a processor, a memory, and an external communication interface and the like are mounted. The power distribution board controller 14 controls the entire DC power distribution board 1. As one example, the distribution board controller 14 acquires information from the current sensor 12 and the DC/DC converter 11 provided inside the DC power distribution board 1, and further transmits and receives information to and from the power distribution system control device 6 provided outside or the power distribution board controller 14 included in another DC power distribution board 1. Then, the power distribution board controller 14 controls the DC/DC converter 11 by giving a command value to the DC/DC converter 11 based on the obtained information.

In addition, the power distribution board controller 14 may include a DC switch operation circuit that drives the DC switch 5 to open and close. The DC switch operation circuit includes, for example, a driver circuit that outputs a drive signal for opening and closing the DC switch 5. In this case, the power distribution board controller 14 drives the DC switch 5 installed in the vicinity to open and close in response to an open/close instruction from the outside, for example, the power distribution system control device 6 or the like.

The power distribution system control device 6 and the energy management device 7 each can be implemented by, for example, a computer system including a processor, a memory, and an external communication interface, and the like. The power distribution system control device 6 mainly performs centralized control of the operation of the entire DC power distribution system. As one example, the power distribution system control device 6 adjusts power flow along the DC wire LNd, that is, the DC loop wire by controlling the bidirectional DC/DC converter 11. On the other hand, the energy management device 7 mainly manages power generated or consumed in the entire DC power distribution system.

In this example, the power distribution system control device 6 and the energy management device 7 are individually provided, but since both are devices that perform communication control of the DC power distribution board 1, one management device that aggregates both functions may be provided. Alternatively, a system configuration may be adopted in which some functions, for example, the function of the energy management device 7 and the like are implemented on a cloud server while the remaining functions are implemented on an onsite facility such as a production factory to perform collaborative operation of both functions.

FIG. 2 is a schematic diagram illustrating a configuration example of a DC power distribution system in which the configuration illustrated in FIG. 1 is expanded. The DC power distribution system illustrated in FIG. 2 further includes one DC power distribution board 1D in addition to the three DC power distribution boards 1A, 1B, and 1C illustrated in FIG. 1. For example, the DC power distribution board 1A inputs or outputs power Pa to or from the outside based on a difference between the generation power by the DC distributed power supply 3 as illustrated in FIG. 1 and the power consumption by the DC load 2A. Similarly, the DC power distribution boards 1B, 1C, and 1D input or output power Pb, Pc, and Pd, respectively, to or from the outside based on power from the DC distributed power supply 3 or the DC power storage device 4 and power at the DC load 2.

When such a configuration is used, as in the case of FIG. 1, the DC loop wire LP1 is formed by the three DC wires LNd between the three DC power distribution boards 1A, 1B, and 1C. In addition, another DC loop wire LP2 is formed by the three DC wires LNd between the other three DC power distribution boards 1B, 1C, and 1D. In the specification, a power distribution path in which the plurality of DC loop wires are arranged in a grid shape or a mesh shape in this manner is referred to as a mesh-like power distribution path.

In this example, the two DC loop wires LP1 and LP2 are formed, but for example, three or four DC loop wires can be formed by further adding one DC power distribution board 1. In the mesh-like power distribution path, at least one of the plurality of DC power distribution boards 1 (in the example illustrated in FIG. 2, the two DC power distribution boards 1B and 1C) is connected to the plurality of DC loop wires LP1 and LP2 in a shared manner.

As described above, by forming the DC loop wire through the plurality of DC power distribution boards 1, it is possible to flexibly construct the power distribution path corresponding to the situation of the facility. As an example, in FIG. 1, even when the generation power from the DC distributed power supply 3 connected to the DC power distribution board 1A is insufficient, power can be supplied from the DC power storage device 4 connected to the DC power distribution board 1B to the DC loop wire, and thus to the DC loads 2A, 2B, and 2C connected to the DC loop wire. Alternatively, for example, even when a fault occurs in a clockwise power distribution path to a predetermined DC load 2, a counterclockwise alternative path can be secured.

Alternatively, for example, as illustrated in FIG. 1, it is possible to construct a wiring topology in which power flow in the DC wire LNd between the adjacent DC power distribution boards 1 (in this example, the three DC wires LNd) can be individually adjusted by input power or output power by the three DC power distribution boards 1A, 1B, and 1C. Therefore, the power flow of each DC wire LNd can be finely adjusted according to the configuration or situation of the facility, and as a result, the power distribution path corresponding to the configuration or situation of the facility can be flexibly constructed.

Furthermore, also by using the mesh-like power distribution path as illustrated in FIG. 2, the power distribution path corresponding to the configuration or situation of the facility can be flexibly constructed. That is, even when the configuration or arrangement of the device in the facility is changed, or even when the operating situation of the facility or the power generation situation in solar power generation is changed, a suitable power distribution path corresponding to change details can be flexibly constructed, for example, by forming the mesh-like power distribution path in advance in the facility such as the production factory. Specifically, for example, to reduce power transmission loss, the power distribution path can be defined using the DC switch 5, and the power flow in the power distribution path, specifically, each DC wire LNd can be adjusted using the DC power distribution board 1.

Note that, for example, in a dendritic, bus, or loop power distribution path as disclosed in Patent Document 1, it may be necessary to re-lay the power supply when changing the configuration of the facility. In addition, it is difficult to finely adjust the power flow in this power distribution path. Furthermore, for example, in the dendritic power distribution path, it is necessary to arrange the battery and others in the trunk system and sequentially start the circuits serving as branches. On the other hand, in the mesh-like power distribution path, stepwise start can be performed in which the section where power supply is possible by the arbitrarily arranged battery is started and stabilized first, and then the starting section is gradually expanded. Therefore, backup start particularly in the event of an emergency becomes flexible.

### <Details of DC Power Distribution Board>

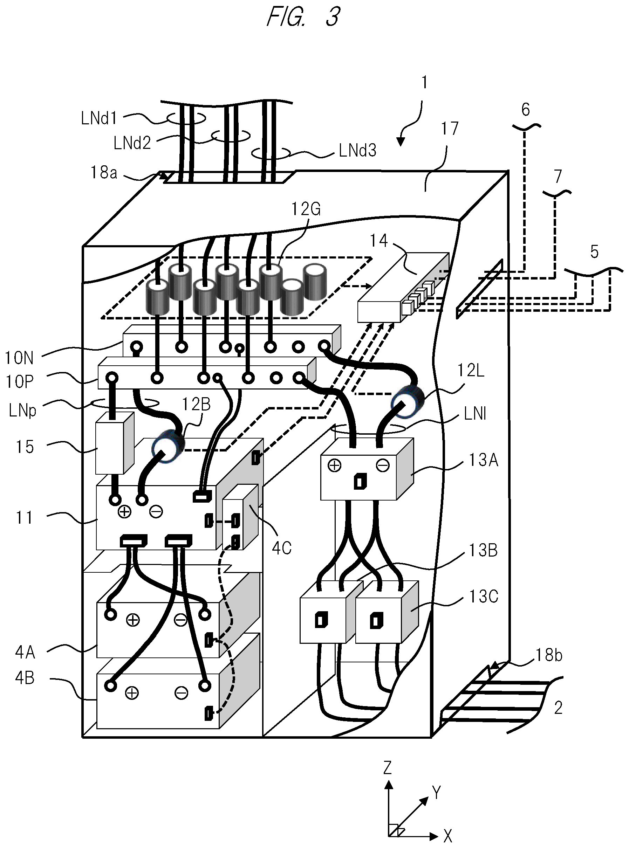

FIG. 3 is a perspective view illustrating an internal configuration example of the DC power distribution board 1 in FIG. 1. The DC power distribution board 1 illustrated in FIG. 3 is constituted by one housing 17 that accommodates a plurality of components. The plurality of components include DC power storage devices 4A and 4B, DC branch units 10P and 10N, the DC/DC converter 11, current sensors 12G, 12L, and 12B, DC circuit breakers 13A, 13B, and 13C, the power distribution board controller 14, and an overcurrent protection element 15. The DC/DC converter 11 is a bidirectional DC/DC converter in this example.

The plurality of DC wires LNd pulled out to the outside are connected to the positive and negative DC branch units 10P and 10N. As described in FIG. 1, each of the plurality of DC wires LNd transmits power to and from another DC power distribution board 1. At least two or more DC wires LNd are connected to the DC branch unit 10 to form the DC loop wire, and in this example, three DC wires or three pairs of DC wires LNd1, LNd2, and LNd3 are connected. Any one of the plurality of DC wires LNd is connected to any other one of the plurality of DC wires LNd via the external wiring path.

The first current sensor 12G measures a current of each of the three DC wires LNd1, LNd2, and LNd3. The second current sensor 12L measures a current of the load power line LNl connecting the DC branch unit 10 and the DC circuit breaker 13. The third current sensor 12B measures a current of the power supply wire LNp connecting the DC branch unit 10 and the DC/DC converter 11.

The overcurrent protection element 15 includes, for example, a fuse or a thermistor, and is inserted on a part of the wiring in the board (in this example, the power supply wire LNp). By providing the overcurrent protection element 15, it is possible to implement safety measures such as preventing the influence of an overcurrent from being propagated when the overcurrent occurs due to a short circuit or the like in circuits before and after the overcurrent protection element. The power distribution board controller 14 includes the DC switch operation circuit as described in FIG. 1 in this example. Thus, the power distribution board controller 14 drives the DC switch 5 to open and close in response to the open/close instruction from, for example, the power distribution system control device 6.

As described above, in the example illustrated in FIG. 3, the DC power storage device 4 is accommodated inside the housing 17 constituting the DC power distribution board 1. The two DC power storage devices 4A and 4B are connected to the two respective power storage device terminals provided in the DC/DC converter 11. With such a configuration in which the plurality of DC power storage devices 4 can be connected to the DC/DC converter 11, the DC power storage device 4B can be used to continue the system operation even if a failure occurs in the DC power storage device 4A.

Note that, in a case where the DC power storage device 4 is constituted by a power storage module in which a plurality of unit cells are connected in series or in parallel, it is desirable to provide a power storage controller 4C that manages the voltage of the unit cells inside as illustrated in FIG. 3. The power storage controller 4C manages the voltage of such unit cells, for example, through communication with a controller in the DC power storage device 4 and the DC/DC converter 11.

In addition, as illustrated in FIG. 3, in a case where the DC power distribution board 1 is constituted by the housing 17 in a substantially rectangular shape, it is desirable that the housing 17 be provided with a first wiring hole 18a on an upper side and a second wiring hole 18b on a lower side. The first wiring hole 18a is a hole for pulling out the DC wire LDd connected to the DC branch unit 10. The second wiring hole 18b is a hole for pulling out the load power line LNl connected to the DC branch unit 10. The load power line LNl is connected to the external DC load 2 via a primary DC circuit breaker 13A and secondary DC circuit breakers 13B and 13C.

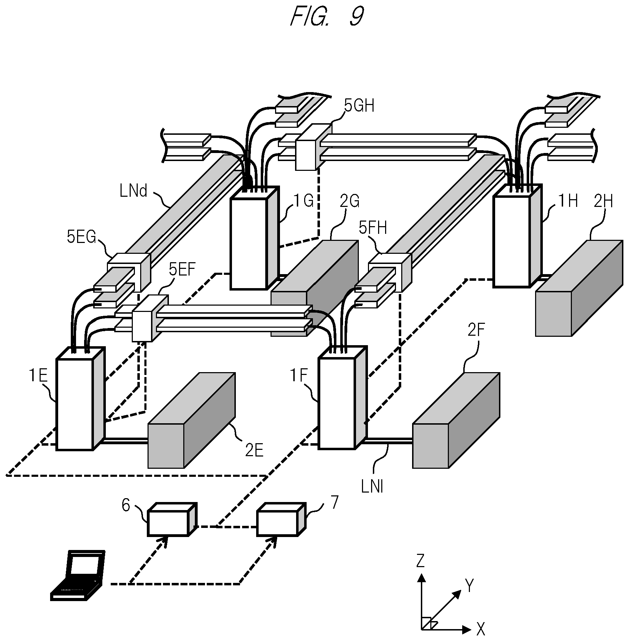

By using such a DC power distribution board 1, it is possible to easily construct the mesh-like power distribution path as illustrated in FIG. 2. With such an arrangement configuration inside the DC power distribution board 1, as will be described in detail with reference to FIG. 9, the DC power distribution board 1 can be easily incorporated into the facility from the viewpoint of the layout of the facility. In addition, since power is transmitted to the primary DC circuit breaker 13A and the secondary DC circuit breakers 13B and 13C in this order, the DC power distribution board 1 is excellent in preventing erroneous operation. Note that, in the specification, a direction horizontal to the ground is defined as an X-axis direction and a Y-axis direction, and a direction perpendicular to the ground is defined as a Z-axis direction. The upper side and the lower side indicate a relative positional relationship in the Z-axis direction.

Furthermore, as illustrated in FIG. 3, the DC power storage device 4 is provided on the lower side of the DC/DC converter 11, and the DC branch unit 10 is provided on the upper side of the DC/DC converter 11. As a result, for example, when an isolated DC/DC converter 11 is used, the DC power storage device 4 and the DC branch unit 10 can be clearly insulated from each other, and the prevention of cross-contact of the DC/DC converter 11 can be enhanced.

In addition, the space where the DC power storage device 4 is accommodated is provided on the lower side of the housing 17. As a result, replacement work or the like is facilitated when the DC power storage device 4, which generally has a large weight and a short life, is replaced. Furthermore, since the DC power storage device 4 is generally a heat generating component, it can effectively promote cooling by taking in outside air at the relatively low position.

### <Details of Power Distribution System Control Device>

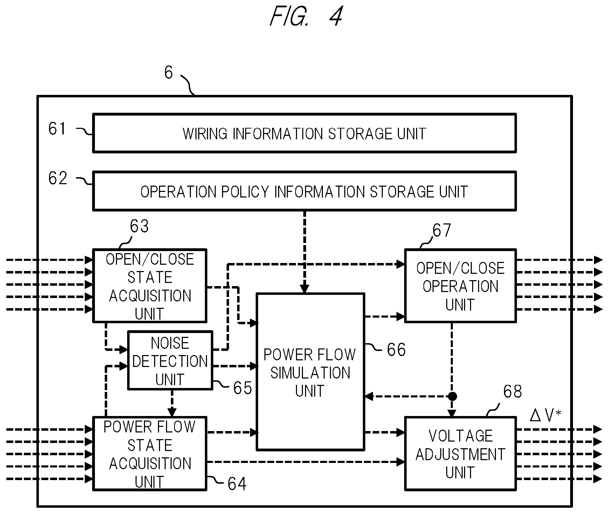

FIG. 4 is a block diagram illustrating a configuration example of the power distribution system control device 6 in FIG. 1. The configuration illustrated in FIG. 4 is implemented by, for example, a computer system including a processor and a memory, and can be implemented mainly by program processing using the processor. The power distribution system control device 6 includes a wiring information storage unit 61, an operation policy information storage unit 62, an open/close state acquisition unit 63, a power flow state acquisition unit 64, a noise detection unit 65, a power flow simulation unit 66, an open/close operation unit 67, and a voltage adjustment unit 68.

The wiring information storage unit 61 holds in advance information on a connection relationship between the plurality of DC power distribution boards 1 via the DC wire LNd. Specifically, the wiring information storage unit 61 holds, for example, information on to which DC power distribution board 1 both ends of each of the DC wires LNd are connected and at which position of the DC branch unit 10 they are connected, and information on the type of the DC wire LNd, a wiring resistance, and a heat resistance index. The operation policy information storage unit 62 holds, for example, information on a predetermined operation policy of the system such as an item of an evaluation index and a target value. The wiring information storage unit 61 and the operation policy information storage unit 62 are implemented by memories.

The open/close state acquisition unit 63 acquires an open/close state of the DC switch 5, for example, through communication with the DC switch 5 or communication with the power distribution board controller 14 that drives the DC switch 5 to open and close. The power flow state acquisition unit 64 acquires power flow information of the DC wire LNd. Specifically, the power flow state acquisition unit 64 acquires detection information by each current sensor 12, information on a current and a voltage detected in the DC/DC converter 11, and the like through communication with each power distribution board controller 14. Thus, in the entire DC power distribution system, the state of a current flowing through each DC wire LNd, the state of a voltage applied to each DC wire LNd, and the like are identified.

As will be described in detail later, the noise detection unit 65 detects that a noise current is superimposed on the DC loop wire based on the information acquired by the open/close state acquisition unit 63 and the power flow state acquisition unit 64. In general, it is known that a return current is induced due to electromagnetic induction when electromagnetic external noise occurs in an annular conductor. The return current generated from noise causes an error in determining the power flow of the entire system.

For this reason, identifying the noise current enables error offset processing. Specifically, the power distribution system control device 6 may correct the data acquired by the power flow state acquisition unit 64, for example, current data so as to offset a current change due to noise. Alternatively, the power distribution system control device 6 may suppress the occurrence of noise current itself by changing some of the DC switches 5 on the DC loop wire where the noise occurs to an open state. Even if a part of the loop is opened in this manner, power distribution to the DC load 2 can be maintained in the mesh-like power distribution path.

The power flow simulation unit 66 constructs an electric circuit model and parameters representing a voltage value, a current value, or a power value on the electric circuit model based on the held information of the wiring information storage unit 61 and the information acquired by the open/close state acquisition unit 63 and the power flow state acquisition unit 64. Then, the power flow simulation unit 66 performs predictive calculation of a power flow change when the value of a predetermined parameter is changed. Alternatively, the power flow simulation unit 66 performs predictive calculation of a power flow change when the open/close state of the DC switch 5 is changed.

As an example, the power flow simulation unit 66 performs predictive calculation of a power flow change when the DC voltage of an arbitrary DC power distribution board 1 is changed from the current operating state. Alternatively, the power flow simulation unit 66 predicts a power flow change and a terminal voltage change of the plurality of DC power distribution boards 1 when the DC power of an arbitrary bidirectional DC/DC converter is changed from the current operating state. Thus, while performing such parameter scanning, the power flow simulation unit 66 identifies parameter conditions under which the evaluation index defined by the operation policy information storage unit 62 approaches the target value. For example, the power flow simulation unit 66 identifies from which DC power distribution board 1 the DC voltage should be adjusted and how much.

The open/close operation unit 67 outputs the open/close instruction to a predetermined DC switch 5 or the power distribution board controller 14 that drives the DC switch 5 to open and close based on predictive calculation results of the power flow simulation unit 66. That is, the open/close operation unit 67 determines whether or not the evaluation index approaches the target value by changing the open/close state of the predetermined DC switch 5 based on the predictive calculation results of the power flow simulation unit 66, and changes the open/close state so as to approach the target value.

In addition, the open/close operation unit 67 outputs the open/close instruction to a predetermined DC switch 5 or the power distribution board controller 14 to open the loop based on detection results of the noise detection unit 65. Note that, in a case where such an open/close operation unit 67 is provided, the open/close state acquisition unit 63 may be configured to acquire operation results of the open/close operation unit 67.

The voltage adjustment unit 68 outputs a voltage adjustment command value ΔV* representing a voltage adjustment amount to any of the plurality of DC power distribution boards 1 based on the predictive calculation results of the power flow simulation unit 66. That is, the voltage adjustment unit 68 notifies the DC power distribution board 1 identified by the power flow simulation unit 66 of the identified voltage adjustment amount. In addition, as will be described in detail later, the voltage adjustment unit 68 notifies the DC power distribution board 1 identified by the power flow simulation unit 66 of the identified voltage adjustment amount to reduce damage to the DC switch 5 also when the open/close instruction of an arbitrary DC switch 5 is output by the open/close operation unit 67.

Thus, by providing the power flow simulation unit 66, in other words, the power distribution system control device 6 equipped with the circuit simulator, it is possible to sequentially optimize the operation, specifically, the power flow state, and the like of the DC power distribution system based on the operation policy of the system. In addition, by providing the noise detection unit 65, it is possible to detect the noise current that may be a side effect associated with the DC loop wire and to take measures for reducing the influence of the noise current.

### <Details of Bidirectional DC/DC Converter>

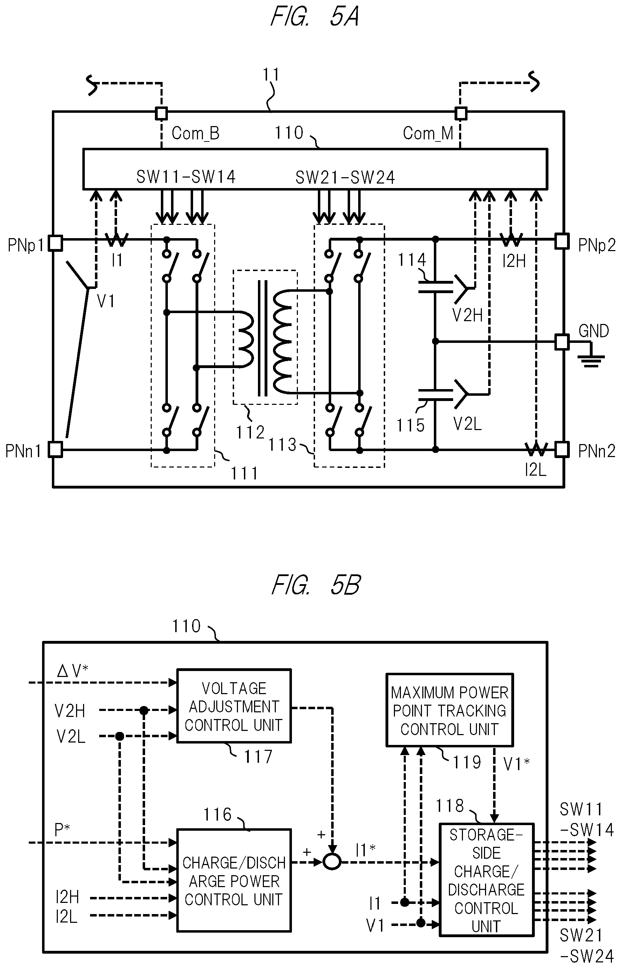

FIG. 5A is a circuit diagram illustrating a configuration example of a bidirectional DC/DC converter that is one form of the DC/DC converter 11 in FIG. 1. FIG. 5B is a block diagram illustrating a configuration example of a DC/DC converter controller 110 in FIG. 5A. The bidirectional DC/DC converter illustrated in FIG. 5A includes primary-side terminals PNp1 and PNn1, secondary-side terminals PNp2 and PNn2, a main circuit that converts power between both the terminals, and the DC/DC converter controller 110 that controls the main circuit.

The main circuit includes an isolation transformer 112 that insulates a primary side from a secondary side, a semiconductor switch group 111 having a bridge configuration that drives the primary side of the isolation transformer 112, a semiconductor switch group 113 having a bridge configuration that drives the secondary side of the isolation transformer 112, and DC capacitors 114 and 115 connected to the secondary side. In addition, an inductance element or a capacitance element (not illustrated) may be added to the primary side or the secondary side to promote energy transfer by switching. Such a main circuit is called a dual active bridge (DAB), and can interchange power bidirectionally.

As an example, in the DAB, the magnitude of the power and the direction in which the power is transmitted can be controlled by controlling a phase difference between a switching phase of the semiconductor switch group 111 and a switching phase of the semiconductor switch group 113. Note that the main circuit of the DC/DC converter 11 is not limited to such a DAB, and various configurations can be applied. That is, an appropriate main circuit may be selected by appropriately combining a unidirectional type/bidirectional type and an insulated/non-insulated type according to the configuration and application of the system.

In addition, this example illustrates a system in which a capacitor group including the plurality of DC capacitors 114 and 115 connected in series is connected between the secondary-side terminals PNp2 and PNn2 of the DC/DC converter 11, and a neutral point of the capacitor group is grounded. By using such a system, it is possible to reduce a voltage difference between the ground voltage GND and the secondary-side voltage, and thus, it is possible to reduce the difficulty of selection and testing of the high withstand voltage component, and to reduce the cost of the system.

The DC/DC converter controller 110 receives as an input detection information such as a primary-side voltage V1, a primary-side current I1, secondary-side voltages V2H and V2L, and secondary-side currents I2H and I2L detected using sensors. Then, the DC/DC converter controller 110 controls a conversion operation of the main circuit based on an operation command value obtained from an external communication terminal Com_M, internal information of the DC power storage device 4 collected from a power storage controller communication terminal Com_B, and the input detection information. In this example, the DC/DC converter controller 110 controls a switching operation of the semiconductor switch group 111 using control signals SW11 to SW14, and controls a switching operation of the semiconductor switch group 113 using control signals SW21 to SW24.

Note that the external communication terminal Com_M is connected to the power distribution board controller 14 in FIGS. 1 and 2. The power storage controller communication terminal Com_B is connected to the power storage controller 4C in FIG. 3. In addition, the DC/DC converter controller 110 can be implemented by, for example, program processing using a processor in a microcontroller, an FPGA, or the like.

More specifically, as illustrated in FIG. 5B, for example, the DC/DC converter controller 110 includes a charge/discharge power control unit 116, a voltage adjustment control unit 117, a storage-side charge/discharge control unit 118, and a maximum power point tracking control unit 119. The charge/discharge power control unit 116 generates a first command value based on, for example, a charge/discharge power command value P* input from the energy management device 7 or the like via the power distribution board controller 14 and the external communication terminal Com_M, and the detection information (V2H, V2L, I2H, I2L) by the sensors. The charge/discharge power command value P* can be appropriately changed in consideration of, for example, a reduction in energy costs.

The voltage adjustment control unit 117 generates a second command value based on, for example, the voltage adjustment command value ΔV* input from the power distribution system control device 6 illustrated in FIG. 4 via the power distribution board controller 14 and the external communication terminal Com_M, and the detection information (V2H, V2L) by the sensors. The storage-side charge/discharge control unit 118 controls the voltage or current of the DC power storage device 4 based on the first command value from the charge/discharge power control unit 116 and the second command value from the voltage adjustment control unit 117.

A storage battery, which is a representative example of the DC power storage device 4, charges and discharges power through a chemical action corresponding to a charge amount. For this reason, it is desirable to apply control based on a current integrated value of the storage battery. Therefore, in the example illustrated in FIG. 5B, the storage-side charge/discharge control unit 118 serving as the final control stage is constituted by a primary-side current control system, and receives as an input a current command value I1* on the DC power storage device 4 side, that is, the primary side that is generated based on the first command value and the second command value. The storage-side charge/discharge control unit 118 generates the control signals SW11 to SW14 and SW21 to SW24 such that an error between the value of the primary-side current I1 and the primary-side current command value I1* approaches 0.

Note that FIG. 5B also illustrates a configuration example in which a solar power generation panel is connected instead of the DC power storage device 4. In a case where the solar power generation panel is connected, the DC/DC converter controller 110 may include the maximum power point tracking control unit 119 that executes the maximum power point tracking control as described in FIG. 1. The maximum power point tracking control unit 119 is constituted by, for example, a control system on a primary-side voltage control system, receives as an input the primary-side voltage V1 and the primary-side current I1, and generates a primary-side voltage command value V1*. The storage-side charge/discharge control unit 118 performs control such that an error between the primary-side voltage value V1 and the primary-side voltage command value V1* approaches 0.

### <Operation Content of Power Flow Simulation Unit>

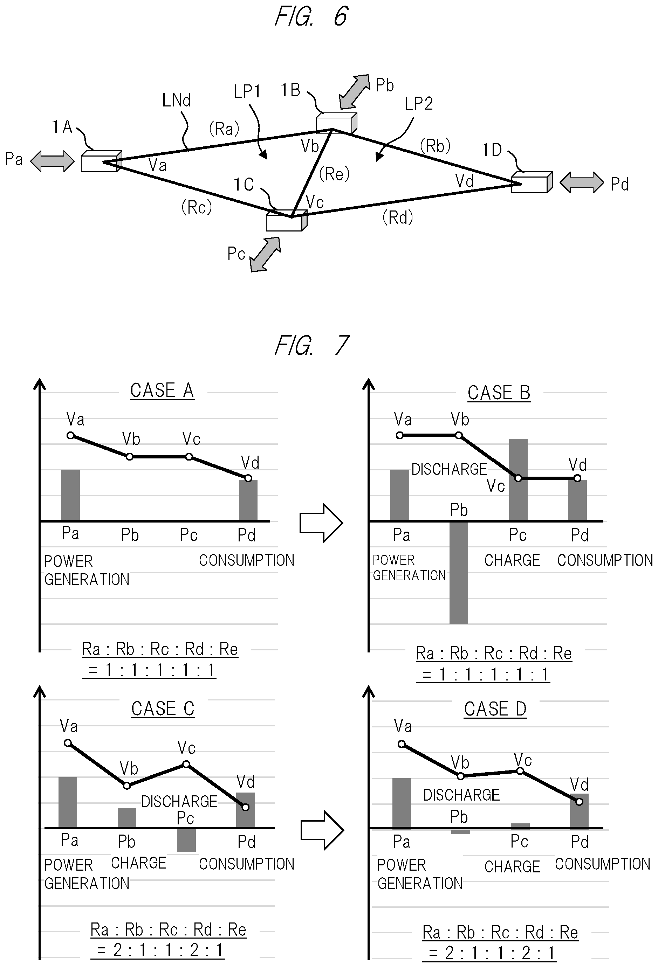

FIG. 6 is a schematic diagram illustrating an example of an electric circuit model constructed by the power flow simulation unit 66 in FIG. 4. FIG. 6 illustrates a circuit model in a case where all the DC switches 5 are in a closed state in the mesh-like power distribution path illustrated in FIG. 2. The power flow simulation unit 66 uses such a circuit model to perform predictive calculation of, for example, an influence of the voltage of the DC power distribution board 1 on the power flow of the DC wire LNd.

In FIG. 6, as in the case of FIG. 2, the four DC power distribution boards 1A, 1B, 1C, and 1D are provided, and these are connected to each other by the five DC wires LNd, so that the two DC loop wires LP1 and LP2 in a triangular shape are formed in a mesh shape. Voltages of the DC branch units 10 in the four DC power distribution boards 1A, 1B, 1C, and 1D are denoted by Va, Vb, Vc, and Vd, respectively. Resistance values of the five DC wires LNd are denoted by Ra, Rb, Rc, Rd, and Re, respectively.

In addition, power balances on the DC loop wires in the four DC power distribution boards 1A, 1B, 1C, and 1D are denoted by Pa, Pb, Pc, and Pd, respectively. The power balance is power corresponding to a difference between power inflow from the DC distributed power supply 3 and power consumption at the DC load 2, or a difference between charging/discharging power of the DC power storage device 4 and power consumption at the DC load 2.

FIG. 7 is a schematic diagram illustrating an example of a change in a power flow when values of parameters are changed in the electric circuit model illustrated in FIG. 6. In FIG. 7, the powers Pa, Pb, Pc, and Pd in FIG. 6 are indicated by a bar graph, and the voltages Va, Vb, Vc, and Vd are indicated by a line graph. In a case A in FIG. 7, under the condition that an impedance, here, the resistance value of each DC wire LNd is the same, for example, generation power of the power Pa is generated in the DC power distribution board 1A, and consumption power of the power Pd is generated in the DC power distribution board 1D.

On the other hand, in a case B in FIG. 7, the power Pb is discharged from the DC power storage device 4 in the DC power distribution board 1B, and the power Pc is charged in the DC power storage device 4 in the DC power distribution board 1C, with reference to the case A. As can be seen from a comparison between the case A and the case B, although the power Pa and Pd and the voltages Va and Vd are common, it is possible to create a situation in which the voltage Va and the voltage Vb are substantially the same and the voltage Vc and the voltage Vd are substantially the same by operating the power Pb and the power Pc.

Thus, by operating the DC power in the DC power distribution board 1 of the entire system, it is possible to bring the voltages at the two terminals of the DC switch 5 inserted on an arbitrary DC wire LNd close to each other, and to restrict the power flow of the DC wire LNd. As a result, for example, when the DC switch 5 is changed from the closed state to the open state, a flowing current of the DC switch 5 can be reduced, and ideally, can be made zero. This can reduce damage caused by the generation of an arc or the like associated with the open operation of the DC switch 5, and can extend the life of the DC switch 5.

As a specific example, in the case B, the DC switch 5 (not illustrated) provided between the DC power distribution board 1A and the DC power distribution board 1B and between the DC power distribution board 1C and the DC power distribution board 1D in FIG. 6 can be changed from the closed state to the open state. Also in this case, since the mesh-like distribution path is used, the distribution path to the DC load 2 (not illustrated) connected to each DC power distribution board 1 is maintained.

Here, the change from the closed state to the open state is taken as an example, but the same applies to the change from the open state to the closed state. That is, by changing the state from the open state to the closed state while the voltages at the two terminals of the DC switch 5 are brought close to each other, it is also possible to reduce damage caused by an inrush current or the like associated with the closing operation of the DC switch 5. In addition, the state in which the flowing current of the DC switch 5 is zero is equivalent to the state in which the DC switch 5 is in the open state. Therefore, from another viewpoint, it is also possible to switch the power distribution path of the mesh-like power distribution path without the open/close operation of the DC switch 5. In this case, since the number of open/close operations of the DC switch 5 can be reduced, the life of the DC switch 5 can be extended.

As an example of an actual operation method, first, it is determined that it is better to change to the open/close state of a predetermined DC switch 5 based on the predictive calculation results at the power flow simulation unit 66 in FIG. 4. In this case, before outputting the open/close instruction to the predetermined DC switch 5, the open/close operation unit 67 outputs information on the open/close instruction to the voltage adjustment unit 68. The voltage adjustment unit 68 adjusts the power flow so as to reduce the voltage difference between the two terminals of the predetermined DC switch 5 using the power flow simulation unit 66, as a pre-operation of the open operation or the close operation of the predetermined DC switch 5.

At this time, the voltage adjustment unit 68 outputs the voltage adjustment command value ΔV* representing the voltage adjustment amount to the bidirectional DC/DC converter via the power distribution board controller 14, for example, so as to change the voltage Vb in the case A to the voltage Vb in the case B. Similarly, the voltage adjustment unit 68 outputs the voltage adjustment command value ΔV* to the bidirectional DC/DC converter via the power distribution board controller 14 so as to change the voltage Vc in the case A to the voltage Vc in the case B.

In a case C in FIG. 7, unlike the case A, the impedance, here, the resistance value of each DC wire LNd is non-uniform. In the case C, for example, the generation power of the power Pa is generated by the DC distributed power supply 3 in the DC power distribution board 1A, and the consumption power of the power Pd is generated by the DC load 2 in the DC power distribution board 1D. Furthermore, the power Pb is charged in the DC power storage device 4 in the DC power distribution board 1B, and the power Pc is discharged from the DC power storage device 4 in the DC power distribution board 1C. On the other hand, in a case D, unlike the case C, the power Pb is discharged in the DC power distribution board 1B, and the power Pc is charged in the DC power distribution board 1C.

As can be seen from a comparison between the case C and the case D, although the powers Pa and Pd and the voltages Va and Vd are substantially common, it is possible to mainly reduce a potential difference between the voltage Va and the voltage Vb and a potential difference between the voltage Vb and the voltage Vc by changing the power Pb and the power Pc. As a result, power loss in the entire system can be reduced. In this example, it is possible to reduce wiring loss of the DC wire LNd connecting the DC power distribution board 1B and the DC power distribution board 1C, particularly, the DC wire LNd connecting the DC power distribution board 1A and the DC power distribution board 1B and having a high resistance value. In this manner, the power distribution system control device 6 can adjust the power flow so as to reduce the power loss on the power distribution path from the DC distributed power supply 3 to the DC load 2 via the DC wire LNd.

### <Details of Noise Detection Unit>

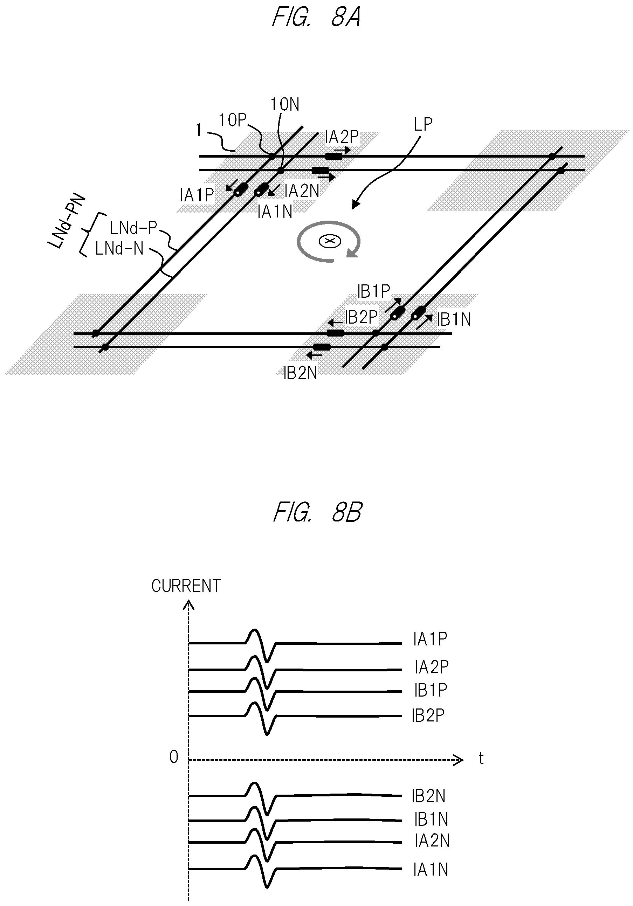

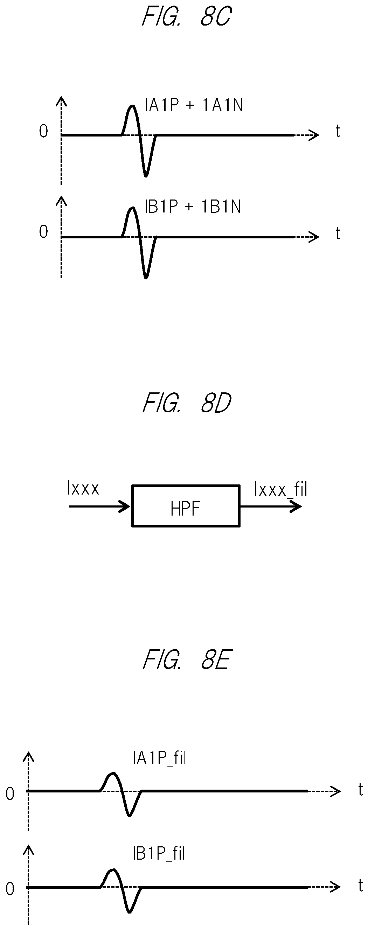

FIGS. 8A, 8B, 8C, 8D, and 8E are schematic diagrams illustrating an example of a detection algorithm of the noise detection unit 65 in FIG. 4. In the example illustrated in FIG. 8A, a DC loop wire LP is formed by a DC wire pair LNd-PN connecting the four DC power distribution boards 1. The DC wire pair LNd-PN includes a positive DC wire LNd-P and a negative DC wire LNd-N.

If a magnetic field line changes in a direction penetrating such a DC loop wire LP, in-phase noise currents are generated in both the positive DC wire LNd-P and the negative DC wire LNd-N, for example, as illustrated in FIG. 8B. For example, a noise current IA1P on the positive side and a noise current IA1N on the negative side in phase with the noise current IA1P are generated. Here, by adding the noise current on the positive side and the noise current on the negative side, an in-phase noise current, for example, "1A1P+1A1N" can be extracted as illustrated in FIG. 8C.

Specifically, for example, the power flow state acquisition unit 64 in FIG. 4 acquires a current on the positive side and a current on the negative side from a certain DC power distribution board 1, and the noise detection unit 65 adds the current on the positive side and the current on the negative side. An alternating current obtained by such addition, for example, "1A1P+1A1N" is an in-phase noise current. That is, unlike the in-phase noise current, in a normal current, the addition result of the current on the positive side and the current on the negative side is zero in terms of the AC component.

Furthermore, the noise detection unit 65 calculates the in-phase noise current of two or more DC wire pairs LNd-PN forming the DC loop wire LP, and obtains a correlation between the calculated two or more in-phase noise currents. When the results find that there is a correlation, the noise detection unit 65 can determine the in-phase noise current as the return current generated by electromagnetic induction. In the example illustrated in FIGS. 8A and 8C, since there is a correlation between the in-phase noise current "1A1P+1A1N" in one DC power distribution board 1 and an in-phase noise current "1B1P+1B1N" in another DC power distribution board 1, the noise detection unit 65 determines the in-phase noise current as the return current.

In addition, in a case where a frequency or the like expectable as noise can be identified in advance, the noise detection unit 65 may perform filter processing of extracting the frequency component on a current on either the positive side or the negative side, for example, "1A1P" as illustrated in FIG. 8D, instead of performing the current addition as illustrated in FIG. 8C. As a result, the noise detection unit 65 can extract a noise current "1A1P_fil" as illustrated in FIG. 8E. Then, as in the case of FIG. 8C, the noise detection unit 65 may extract the noise current from two or more DC wires LNd forming the DC loop wire LP, and may obtain a correlation between two or more noise currents, for example, "1A1P_fil" and "1B1P_fil."

In this manner, by detecting the noise current from the two or more DC wires LNd or DC wire pairs LNd-PN, and obtaining a correlation between the two or more detected noise currents, it is possible to more reliably determine whether or not the noise current is the return current. Then, if the noise current is the return current, it is possible to take measures such as changing some of the DC switches 5 on the DC loop wire LP to the open state or correcting the data acquired from the DC power distribution board 1 on the DC loop wire LP.

Note that, when the noise current is extracted, an amplitude threshold may be provided in advance to exclude a noise whose influence can be ignored, and the noise detection unit 65 may be configured to ignore a current of an amplitude smaller than the threshold. Alternatively, a threshold may be provided for the temporal change amount of a current, and the noise detection unit 65 may be configured to ignore the current of a temporal change amount smaller than the threshold.

### <Main Effects of First Embodiment>

As described above, in the system of the first embodiment, the DC loop wire that runs in one loop through the two or more DC power distribution boards is formed, and desirably, the mesh-like power distribution path is constructed by arranging the plurality of DC loop wires in the grid shape or the mesh shape. By using such a configuration, it is possible to flexibly construct a power distribution path corresponding to the configuration or the situation of the facility. In addition, it is possible to adjust the power flow along the DC wire connecting the DC power distribution boards using the two or more DC power distribution boards. As a result, for example, it is possible to reduce damage associated with the open/close operation of the DC switch inserted on the DC wire.

### (Second Embodiment)

### <Application Example of DC Power Distribution System>

FIG. 9 is a perspective view illustrating an arrangement configuration example in which a DC power distribution system according to a second embodiment is applied to a facility. FIG. 9 illustrates an arrangement configuration example of each unit in a case where the DC power distribution system described in the first embodiment is laid on a floor of the facility such as the production factory, for example. In FIG. 9, four DC power distribution boards 1E, 1F, 1G, and 1H are arranged in four corners, respectively, of a quadrangular, for example, rectangular grid. In the entire facility, such a grid is sequentially arranged in the X-axis direction and the Y-axis direction.

The four DC power distribution boards 1E, 1F, 1G, and 1H are connected via the four DC wires LNd corresponding to four sides of the grid. The DC wire LNd is laid, for example, as a ceiling-suspended wire rack. Note that the DC wire LNd may be a structure such as a bus duct in addition to a cable. On the other hand, for example, DC loads 2E, 2F, 2G, and 2H such as manufacturing devices are connected to the DC power distribution boards 1E, 1F, 1G, and 1H, respectively, via the load power line LNl laid in pits or the like on the floor surface. By using such an arrangement configuration example, for example, it is possible to construct a DC power distribution system suitable for the vertical arrangement inside the DC power distribution board 1 illustrated in FIG. 3.

In addition, four DC switches 5EF, 5FH, 5GH, and 5EG are inserted on the four DC wires LNd, respectively. At this time, each DC switch 5 is preferably arranged near the DC power distribution board 1 so as to be easily operated by the DC power distribution board 1. In addition, each DC power distribution board 1, specifically, the power distribution board controller 14 is preferably configured such that the number of the above-described DC switch operation circuits, for example, driver circuits can be increased. Furthermore, each DC power distribution board 1 is preferably configured such that the number of the first current sensors 12G illustrated in FIG. 3 that measure the current of the DC wire LNd can also be increased.

In general, in the production factory or the like, a straight line is frequently used as a flow line of a conveyance machine, and thus, as illustrated in FIG. 9, the DC power distribution boards 1 are desirably arranged in the grid shape using a quadrangle as a standard. Thus, the maximum number of the DC switch operation circuits installed can be four in the DC power distribution board 1 that is the intersection of the grid. Similarly, the maximum number of the current sensors 12G installed can also be four in the DC power distribution board 1.

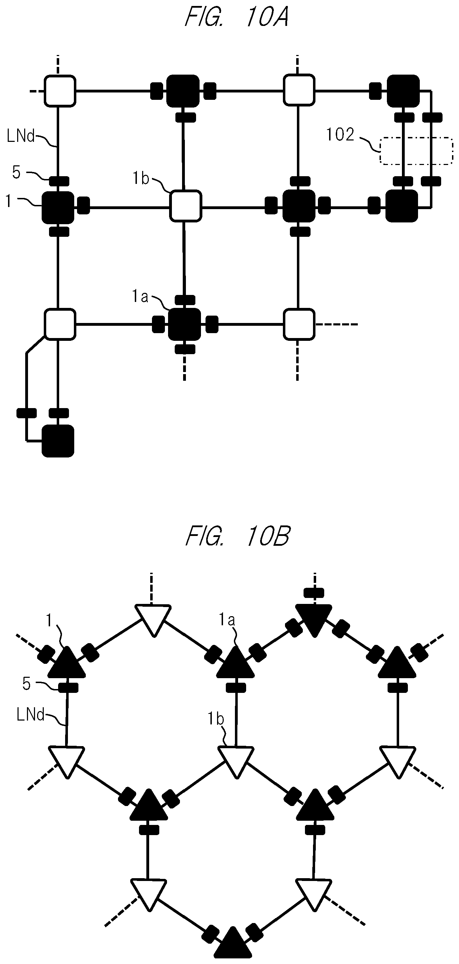

FIG. 10A is a plan view illustrating a schematic arrangement configuration example in which the DC power distribution system illustrated in FIG. 9 is viewed from above. In FIG. 10A, as described above, the grid forms a quadrangle on the XY plane. In this case, all the DC power distribution boards 1 do not need to drive the DC switch 5, and it suffices that the DC power distribution board 1 determined based on a certain standard drives the DC switch 5. Similarly, all the DC power distribution boards 1 do not need to measure the current flowing through the DC wire LNd, and it suffices that the DC power distribution board 1 determined based on a certain standard measures the current flowing through the DC wire LNd.

Here, as the certain standard, a first group of the DC power distribution boards 1a indicated in black and a second group of the DC power distribution boards 1b indicated in white are alternately arranged on the XY plane at least in a partial region. The first group of the DC power distribution boards 1a drives the DC switch 5 and measures the current flowing through the DC wire LNd. On the other hand, the second group of the DC power distribution boards 1b does not drive the DC switch 5 and does not measure the current flowing through the DC wire LNd.

By providing such a certain standard, it is possible to, for example, facilitate the open/close management of the DC switch 5, and eliminate the redundant measurement of the current flowing through the DC wire LNd. Furthermore, in the second group of the DC power distribution boards 1b, the DC switch operation circuit does not particularly need to be mounted, and the first current sensor 12G also does not need to be mounted. This can reduce component costs. Note that, in the DC wire LNd between the DC power distribution boards 1, two systems of DC wires may be connected in parallel to the DC branch unit 10, thereby expanding the power transmission capacity between the DC power distribution boards 1, as illustrated in an area 102.

FIG. 10B is a plan view illustrating an arrangement configuration example in which the arrangement illustrated in FIG. 10A is modified. In FIG. 10B, the grid forms a hexagon including at least one pair of parallel sides. In this case, the DC power distribution board 1 drives up to three DC switches 5 and measures currents flowing through up to three DC wires LNd. In FIG. 10B, as in FIG. 10A, the first group of the DC power distribution boards 1a and the second group of the DC power distribution boards 1b are alternately arranged on the XY plane at least in a partial region.

Although the invention made by the present inventor has been specifically described based on the embodiments, the present invention is not limited to the above-described embodiments, and various modifications can be made without departing from the gist of the present invention. For example, the above-described embodiments explain about the details to describe the present invention in an easy-to-understand manner, and are not necessarily limited to those having all the described configurations. In addition, a part of the configuration of a certain embodiment can be replaced with the configuration of another embodiment, and the configuration of another embodiment can be added to the configuration of a certain embodiment. Furthermore, another configuration can be added to, deleted from, and replaced with a part of the configuration of each embodiment.

### REFERENCE SIGNS LIST

- 1: DC power distribution board
- 2: DC load
- 3: DC distributed power supply
- 4: DC power storage device
- 5: DC switch
- 6: Power distribution system control device
- 10: DC branch unit
- 11: DC/DC converter
- 12: Current sensor
- 13: DC circuit breaker
- 14: Power distribution board controller
- 17: Housing
- 18: Wiring hole
- 61: Wiring information storage unit
- 63: Open/close state acquisition unit
- 64: Power flow state acquisition unit
- 65: Noise detection unit
- 66: Power flow simulation unit
- 68: Voltage adjustment unit
- LNd: DC wire
- LNl: Load power line
- LNp: Power supply wire
- LP: DC loop wire

## Claims

1. A DC power distribution system comprising:
a plurality of DC power distribution boards that distribute input DC power;
a DC wire that transmits the DC power between the plurality of DC power distribution boards; and
a power distribution system control device that performs centralized control of the plurality of DC power distribution boards,
wherein the DC wire runs in one loop through at least two or more DC power distribution boards of the plurality of DC power distribution boards to form a DC loop wire,
wherein a first DC power distribution board that is one of the plurality of DC power distribution boards includes a bidirectional DC/DC converter and is configured to be able to connect a DC power storage device that stores the DC power via the bidirectional DC/DC converter, and
wherein the power distribution system control device controls the bidirectional DC/DC converter to adjust a power flow along the DC wire.

2. The DC power distribution system according to claim 1, further comprising:
a DC switch inserted on the DC wire and configured to be able to open and close between two terminals,
wherein the power distribution system control device adjusts the power flow so as to reduce a voltage difference between the two terminals as a pre-operation of an open operation or a close operation of the DC switch.

3. The DC power distribution system according to claim 1,
wherein a second DC power distribution board that is another one of the plurality of DC power distribution boards includes a DC/DC converter, and is configured to be able to connect a DC distributed power supply that generates power via the DC/DC converter,
wherein at least one of the plurality of DC power distribution boards is configured to be able to connect a DC load via a DC circuit breaker that cuts off a path when an abnormal current is detected, and
wherein the power distribution system control device adjusts the power flow so as to reduce a power loss on a power distribution path from the DC distributed power supply to the DC load via the DC wire.

4. The DC power distribution system according to claim 2,
wherein the power distribution system control device includes:
a wiring information storage unit that holds information on a connection relationship between the plurality of DC power distribution boards via the DC wire;
a power flow state acquisition unit that acquires power flow information of the DC wire;
an open/close state acquisition unit that acquires an open/close state of the DC switch;
a power flow simulation unit that constructs an electric circuit model and a parameter representing a voltage value, a current value, or a power value on the electric circuit model based on held information of the wiring information storage unit and information acquired by the power flow state acquisition unit and the open/close state acquisition unit and that performs predictive calculation of a power flow change when the value of the parameter is changed; and
a voltage adjustment unit that outputs a voltage adjustment command value representing a voltage adjustment amount to any of the plurality of DC power distribution boards based on a predictive calculation result of the power flow simulation unit.

5. The DC power distribution system according to claim 4,
wherein the power flow simulation unit performs predictive calculation of a power flow change when a DC voltage of an arbitrary DC power distribution board of the plurality of DC power distribution boards is changed.

6. The DC power distribution system according to claim 4,
wherein the power flow simulation unit performs predictive calculation of a power flow change and a terminal voltage change of the plurality of DC power distribution boards when the DC power of the bidirectional DC/DC converter is changed.

7. The DC power distribution system according to claim 4,
wherein the power distribution system control device further includes a noise detection unit that detects that a noise current is superimposed on the DC loop wire based on the information acquired by the open/close state acquisition unit and the power flow state acquisition unit.

8. The DC power distribution system according to claim 7,
wherein the power distribution system control device changes some of the DC switches of the DC loop wire to an open state when the noise detection unit detects noise.

9. The DC power distribution system according to claim 7,
wherein the power distribution system control device corrects data acquired by the power flow state acquisition unit so as to offset a current change due to noise when the noise detection unit detects the noise.

10. The DC power distribution system according to claim 7,
wherein the noise detection unit detects the noise current from two or more DC wires forming the DC loop wire, and determines the noise current as a return current associated with electromagnetic induction when there is a correlation between the two or more detected noise currents.

11. The DC power distribution system according to claim 1,
wherein the DC loop wires are formed in a plural number, and
wherein at least one of the plurality of DC power distribution boards is connected to the plurality of DC loop wires in a shared manner.

12. The DC power distribution system according to claim 11, further comprising
a DC switch inserted on the DC wire and configured to be able to open and close between two terminals,
wherein the plurality of DC power distribution boards include:
a first group of the DC power distribution boards that drives the DC switch to open and close and measures a current flowing through the DC wire; and
a second group of the DC power distribution boards that does not drive the DC switch to open and close and does not measure the current flowing through the DC wire, and
wherein the first group of the DC power distribution boards and the second group of the DC power distribution boards are alternately arranged.

13. A DC power distribution board constituted by one housing that accommodates a plurality of components,
wherein the plurality of components include:
a DC branch unit connected to a plurality of DC wires leading to an outside and made of a conductive material;
a bidirectional DC/DC converter connected to the DC branch unit via a power supply wire;
a DC power storage device that stores DC power and is connected to the DC branch unit via the bidirectional DC/DC converter;
a DC circuit breaker that is inserted on a load power line connecting the DC branch unit and a DC load provided outside, and cuts off a path of the load power line when an abnormal current is detected;
a first current sensor that measures currents of the plurality of DC wires;
a second current sensor that measures a current of the load power line;
a third current sensor that measures a current of the power supply wire; and
a power distribution board controller that controls the DC power distribution board and the bidirectional DC/DC converter, and
wherein one of the plurality of DC wires is connected to another one of the plurality of DC wires via an external wiring path.

14. The DC power distribution board according to claim 13,
wherein, on the assumption that a DC switch configured to be able to open and close between two terminals is inserted on at least one of the plurality of DC wires,
the power distribution board controller includes a DC switch operation circuit that drives the DC switch to open and close.

15. The DC power distribution board according to claim 13,
wherein, when a relative positional relationship in a direction perpendicular to a ground is defined as an upper side and a lower side,
the housing is provided with a first wiring hole for pulling out the plurality of DC wires to an outside on the upper side and a second wiring hole for pulling out the load power line to the outside on the lower side.

16. The DC power distribution board according to claim 15,
wherein the DC branch unit, the bidirectional DC/DC converter, and the DC power storage device are arranged in order from the upper side to the lower side.
